# NEUE EUROPÄISCHE PATENTSCHRIFT

(11) **EP 1 871 673 B2**
(45) Veröffentlichungstag und Bekanntmachung des Hinweises auf die Entscheidung über den Einspruch: **13.08.2014**
(45) Hinweis auf die Patenterteilung: 16.09.2009
(21) Anmeldenummer: 06722806.4
(22) Anmeldetag: 19.04.2006
(51) Int. Cl.: B65B 53/00, B65B 53/04

(54) **VORRICHTUNG ZUM SCHRUMPFEN VON VERPACKUNGEN**
DEVICE FOR SHRINKING PACKAGINGS
DISPOSITIF POUR RETRECIR DES EMBALLAGES

(30) Priorität: 19.04.2005 DE 102005018252
(43) Veröffentlichungstag der Anmeldung: 02.01.2008
(73) Patentinhaber: Multivac Sepp Haggenmüller GmbH & Co. KG, 87787 Wolfertschwenden (DE)
(72) Erfinder: EHRMANN, Elmar, Eugen, 87730 Bad Grönenbach (DE)
(74) Vertreter: Grünecker, Kinkeldey, Stockmair & Schwanhäusser
(86) Internationale Anmeldenummer: PCT/DE2006/000687
(87) Internationale Veröffentlichungsnummer: WO 2006/111148

(56) Entgegenhaltungen:
- WO-A-98/57856
- DE-A1- 3 318 993
- DE-A1- 3 600 585
- GB-A- 2 119 341
- JP-A- H0 995 320
- JP-A- 2002 005 582
- US-A- 3 678 244
- US-A- 3 978 874
- US-A- 5 400 570

## Beschreibung

Die Erfindung betrifft eine Vorrichtung und ein Verfahren zum Schrumpfen von Verpackungen nach den Oberbegriffen des, Anspruchs 1 und des Anspruchs 13. Eine solche Vorrichtung ist z.B. aus der JP 9-95320 bekannt.

Zum weitgehend formschlüssigen Verpacken von Packgut in Packungen ist es üblich, das Packgut in schrumpffähigen Packmaterialien, z.B. schrumpffähigen Kunststofffelien zu verpacken, beispielsweise einzuschweißen. Durch Aufheizen wird sodann die Verpackung zum Schrumpfen gebracht, so dass sich diese um das Packgut herum zusammenzieht. Hierzu werden bei handelsüblichen Verpackungsmaschinen sogenannte Schrumpftunnel oder Schrumpftanks verwendet, in denen Wasser erhitzt wird. Die Packungen mit einzuschrumpfender Verpackung werden dabei mit heißem Wasser benetzt. Durch die ständig Dampfentwicklung entsteht bei derartigen Vorrichtungen ein großer Energiebedarf.

Aufgabe der Erfindung ist es daher, eine Vorrichtung und ein Verfahren nach den Oberbegriffen der Ansprüche 1 und 13 mit verringertem Energiebedarf vorzuschlagen.

Diese Aufgabe wird ausgehend von einer Vorrichtung und einem Verfahren der einleitend genannten Art durch die kennzeichnenden Merkmale der Ansprüche 1 und 13 erreicht.

Durch die in den Unteransprüchen aufgeführten Maßnahmen sind vorteilhafte Ausführungen und Weiterbildungen der Erfindung möglich.

Dementsprechend zeichnet sich eine erfindungsgemäße Vorrichtung dadurch aus, dass eine Wärmerückgewinnung mittels einer Rückführungsvorrichtung zur Rückführung von aus dem flüssigen Heizmedium verdampften Heizmedium vorgesehen ist. Das entsprechende erfindungsgemäße Verfahren zeichnet sich durch die Verwendung solcher Vorrichtungen aus.

Durch die Rückführungsvorrichtung wird die in die Umgebung abgegebene Wärmeenergie, die in abgedampftem Heizmedium enthalten ist, zumindest teilweise in die erfindungsgemäße Vorrichtung zurückgeführt, so dass der dort zum Heizen benötigte Energiebedarf deutlich reduziert werden kann. Dabei wird insbesondere der Umstand genutzt, dass in der Verdampfungswärme, die beim Übergang von der flüssigen in die dampfförmige Phase vom Heizmedium aufgenommen wird, eine erhebliche Energiemenge enthalten ist, die bislang bei derartigen Vorrichtungen ungenutzt abgeführt wurde. Die Erfindung nutzt demnach die durch den Phasenübergang aufgenommene Energie des verdampften Heizmediums.

In einer bestimmten Ausführungsform der Erfindung umfasst die Rückführungsvorrichtung einen Abzug für das verdampfte Heizmedium. Mittels eines solchen Abzugs kann das verdampfte Heizmedium gesammelt und zur erfindungsgemäßen Rückgewinnung der Verdampfungswärme genutzt werden. Bislang wurden solche Abzüge stets nur dazu verwendet, um verdampftes Heizmedium aufzufangen und ins Freie abzuleiten.

Der Abzug wird vorzugsweise im Bereich der Öffnungen der Schrumpfvorrichtung z. B. am Eingang und/oder am Ausgang zum Eintrag bzw. Austrag, insbesondere oberhalb dieser Öffnungen angeordnet, so dass nur der Dampf in die Rückführungsvorrichtung gelangt, der ansonsten zu entweichen droht und damit zu einem Energieverlust führen würde.

In einer besonderen Ausführungsform der Erfindung werden ein oder mehrere Abtrennelemente im Bereich des Eingangs und/oder des Ausgangs angebracht, um die Energieverluste zu beschränken. Derartige Trennelemente können beispielsweise in Form von Vorhängen vorliegen, durch die die zu schrumpfenden Packungen problemlos in die erfindungsgemäße Vorrichtung eingebracht bzw. wieder ausgetragen werden können.

In einer Weiterbildung dieser Ausführungsform wird die Rückführung des Heizmediums derart ausgestaltet, dass zwischen zwei solchen Trennelementen eine Absaugung des Heizmediums, insbesondere von Wasserdampf vorgesehen ist.

Um hierbei eine definierte Strömung auszubilden kann es von Vorteil sein, zusammen mit dem abgezogenen Heizmedium Außenluft anzusaugen, um einen ausreichenden Volumenstrom zu erzeugen.

In einer Weiterbildung der Erfindung wird zudem eine Trenneinheit zum Abtrennen von in der Rückführung mitabgezogener Luft aus dem flüssigen und/oder dampfförmigen Heizmedium vorgesehen. Eine solche Trenneinheit kann beispielsweise in Form eines Beruhigungstanks nach dem Übergang in die flüssige Phase bestehen, indem sich die im rückgeführten Dampf enthaltene Luft nach der Kondensation nach oben abtrennen kann. Eine weitere mögliche Ausführungsform besteht darin, oberhalb des Einlassen des rückgeführten Heizmediums in das flüssige Heizmedium eine Auffanghaube vorzusehen, unter der sich die mitgeführte Luft in dem flüssigen Heizmedium sammeln kann. Durch entsprechende Ausgestaltung, z.B. durch schräge Anordnung oder Anbringen eines Abzugrohres kann die so gesammelte Luft nach Außen abgeführt werden.

Zum Ausgleich von Verlusten an flüssigem Heizmedium wird Vorteilhafterweise eine Zuleitung für die Zufuhr frischen, flüssigen Heizmediums vorgesehen. In einer besonderen Weiterbildung dieser Ausführungsform der Erfindung wird die Zufuhr frischen Heizmediums innerhalb der Rückführungsleitung vorgenommen, sodass durch Zufuhr von frischem, kühlen und flüssigen Heizmedium der rückgeführte Dampf wenigstens teilweise zur Kondensation gebracht wird und zugleich dessen Wärmeenergie zum Vorheizen des frisch zugeführten Heizmediums verwendet wird. In einer weiteren vorteilhaften Weiterbildung dieser Ausführungsform wird ein Sprühkopf im Innern der Rückführung vorgesehen, um eine hohe Kontaktfläche zwischen zugeführtem, frischem Heizmedium und rückgeführtem Heißdampf zu gewährleisten.

Die Erfindung sieht die Wasserzuführung in einem Zusatzbehälter vor, der Vorteilhafterweise zugleich als Beruhigungstank verwendet wird.

Bei der Erfindung wird das rückgeführte Heizmedium über einen Wärmetauscher geführt, so dass lediglich die darin enthaltene Energie als Prozesswärme wiederverwendet wird. Die letztere Variante ist insbesondere dann von Vorteil, wenn ein flüssiges Heizmedium vorgesehen ist, wobei das rückgeführte Heizmedium verdampft, also gasförmig ist. In diesem Fall ist zwar grundsätzlich die im Dampf enthaltene Energie durch Kondensation im flüssigen Medium bei einer unmittelbaren Rückführung des Heizmediums nutzbar, bei Verwendung eines Wärmetauschers ist jedoch sicher gestellt, dass im flüssigen Heizmedium keine Turbulenzen oder Sprudeleffekte auftreten, die die Funktionsweise der Vorrichtung beeinträchtigen können.

Bei Verwendung eines Wärmetauschers wird dieser im Bereich der Zufuhr von frischen Heizmedium, beispielsweise von frischem Wasser angeordnet, so dass dieses über den Wärmetauscher vorgewärmt wird, bevor es in den Bereich der Heizung gelangt. Hierzu wird der Wärmetauscher vorteilhafterweise in Gegenstromrichtung zum zugeführten frischen Heizmedium angeordnet. Erfindungsgemäß wird der Raum für die Vorwärmung mittels des Wärmetauschers lediglich durch eine Trennwand mit Überlauf von dem eigentlichen Vorratsbehälter getrennt ausgeführt. Hierbei ist gewährleistet, dass nur das oben befindlichen vorgewärmte Wasser über den Überlauf treten kann.

In einer Weiterbildung der Erfindung wird ein durch die gesamte Vorrichtung hindurchführendes Transportband vorgesehen, wobei zwischen dem Ober- und Untertrum Abschottungselemente untergebracht werden, die den Durchtritt von gasförmigem Heizmedium durch Einschränkung des freien Querschnittes reduzieren.

Die erfindungsgemäße Vorrichtung wird mit einem Heizmedium enthaltenden Gehäuse ausgebildet. Dies entspricht der bewährten Anordnung sogenannter Schrumpftanks oder Schrumpftunnels, wobei in einem solchen Gehäuse eine mit flüssigem Heizmedium gefüllte Heizwanne angeordnet ist.

Weiterhin wird eine solche Heizwanne mit einer Heizung für flüssiges Heizmedium versehen, was beispielsweise in Form einer Heizschlange, einer Heizplatte oder aber auch in Form eines Durchlauferhitzers realisierbar ist.

Insbesondere bei Verwendung eines Durchlauferhitzers, aber auch bei anderen Heizungsformen ist eine externe Anordnung außerhalb der Heizwanne realisierbar. Derartige externe Heizungen haben den Vorteil, dass keine durch unmittelbaren Kontakt mit der entsprechenden Herzoberfläche gebildete Dampfblasen in der Heizwanne aufsteigen können und unmittelbar als Dampf entweichen. Während des Transports von der externen Heizvorrichtung in die Heizwanne ergibt sich ein Temperaturausgleich, bei dem solche, etwaige gebildete Dampfblasen zumindest teilweise wieder in die flüssige Phase übergeführt werden.

Die Heizungen können dabei insbesondere auch als Dampfheizung, oder als auch elektrische und/oder fossile Brennstoffheizungen gegebenenfalls unter Zwischenschaltung eines Wärmetausches in der Heizwanne ausgebildet werden. (Ein Wärmetauscher ergibt eine vollständige Kreislauftrennung was unter anderem unter hygienischen Gesichtspunkten von Vorteil ist.)

Als Heizmedium wird vorzugsweise Wasser verwendet, was insbesondere im Lebensmittelbereich von Vorteil ist. Einerseits ist Wasser selbst ein Nahrungsmittel und somit unbedenklich im Hinblick auf eine mögliche Oberflächenbenetzung der Packung. Andererseits kann mittels heißem Wasser oder heißem Wasserdampf eine keimfreie Umgebung geschaffen werden. Dies ist bei dicht versiegelten Verpackungen zwar nicht zwingend erforderlich, jedoch im Lebensmittelbereich grundsätzlich vorteilhaft.

Der Wärmekontakt der Packungen zum Schrumpfen der Verpackungen kann beispielsweise mit dem flüssigen Heizmedium hergestellt werden, in dem die Packungen über eine gewisse Kontaktzeit in das flüssige Heizmedium eingetaucht werden. Auch ein Besprühen über eine entsprechende Sprüheinheit mit Sprühdüsen kann für eine Benetzung der Packungen mit flüssigem Heizmedium vorgesehen werden.

Eine weitere bislang nicht bekannte Form, die Benetzung von Packungen mit schrumpffähiger Verpackung durch heißes flüssiges Heizmedium, z.B. Wasser, durchzuführen, besteht darin, einen oder mehrere Fluidvorhänge, insbesondere Wasservorhänge nach Art eines Wasserfalls auszubilden. Hierzu werden vorzugsweise eine oder mehrere Schlitzdüse vorgesehen, aus denen vorhangartig die Flüssigkeit austreten und die zu schrumpfenden Verpackungen vollständig benetzten kann.

Ein Wasservorhang wie oben angeführt, kann beispielsweise auch dadurch realisiert werden, dass eine Wasserrinne mit Überlauf vorgesehen wird. Die Wasserzufuhr in die Rinne sollte möglichst ruhig durchgeführt werden. Die Rinne stellt demnach eine Art Beruhigungszone für das zugeführte Wasser dar. Der Überlauf erfolgt drucklos und kann dabei in Längsrichtung der Rinne erfolgen, so dass ein langgestreckter Wasservorhang erzeugt wird. Um einen möglichst flächigen Wasservorhang ohne Abrisse zu bewirken, wird in einer vorteilhaften Ausführungsform die Seitenwand einer solchen Rinne mit einer Abkantung nach unten versehen, die gewissermaßen als Leitfläche für den Wasservorhang dient. Die oben angeführte Wasserzufuhr in die Rinne kann beispielsweise durch ein perforiertes Rohr erfolgen, das ganz oder teilweise in das Wasser eingetaucht ist und mit Auslauföffnungen unterhalb der Wasserlinie versehen ist. Diese Wasserauslauföffnungen können in Längsrichtung des Rohres verteilt sein um eine gleichmäßig, ruhige Wasserzufuhr über die gesamte Länge der Wasserrinne sicher zu stellen.

Die Benetzung der Packungen durch einen oder mehrere Fluidvorhänge hat gegenüber dem vorbekannten sprühen den Vorteil, dass weniger Heizmedium abdampft, und zugleich eine vollständigere Benetzung der zu schrumpfenden Verpackungen gewährleistet ist.

Bei der eintauchenden Ausführungsform kann beispielsweise eine Transportvorrichtung für die Packungen vorgesehen werden, die getaktet arbeitet und in der Lage ist, während des Aufenthalts in der Heizkammer zusammen mit den Packungen in das flüssige Heizmedium ab- und nach geeigneter Verweildauer wieder aufzutauchen.

In anderen Ausführungsformen ist jedoch auch ein Schrumpfen im Wärmekontakt mit dampfförmigem Heizmedium realisierbar, z.B. indem die Packungen zum Schrumpfen der Verpackung in die Dampfatmosphäre oberhalb von flüssigem Heizmedium eingebracht wird. Auch Mischformen, d.h. gleichzeitiger Kontakt mit flüssigem und dampfförmigen Heizmedium sind ohne weiteres denkbar. Beim Besprühen kann sich durch die starke Dampfentwicklung zum Beispiel ein solcher Kontakt mit flüssigem und gasförmigen Heizmedium ergeben.

Bevorzugt wird die Kontaktzeit für den Wärmekontakt einstellbar ausgebildet, was beispielsweise durch eine einstellbare Transportzeit der Packung durch das Heizmedium oder eine einstellbare Tauchzeit verwirklicht werden kann.

Für den Transport der Packungen durch die erfindungsgemäße Vorrichtung werden bevorzugt ein oder mehrere Transportbänder und/oder Rollenbahnen vorgesehen. Dadurch ist ein kontinuierlicher Betrieb möglich. Darüber hinaus kann bei einem Transportband über die Transportgeschwindigkeit die Kontaktdauer mit dem Heizmedium eingestellt werden. Auf diese Weise kann für unterschiedliche Verpackungen stets ein ausreichender Schrumpfvorgang gewährleistet werden.

Ein Ausführungsbeispiel der Erfindung ist in der Zeichnung dargestellt und wird anhand der Figuren nachfolgend näher erläutert.

Im einzelnen zeigen
- Figur 1: eine schematische Schnittdarstellung durch eine erste, nicht erfindungsgemäße Ausführungsvariante,
- Figur 2: eine Darstellung entsprechend Figur 1 eines zweiten, nicht erfindungsgemäßen Ausführungsbeispiels,
- Figur 3: eine schematische Seitenansicht einer Vorrichtung zur Erzeugung eines Wasservorhangs,
- Figur 4: einen schematischen Querschnitt durch eine Vorrichtung gemäß Figur 3 und
- Figur 5: eine Figur 1 entsprechende Darstellung einer Ausführungsform der Erfindung

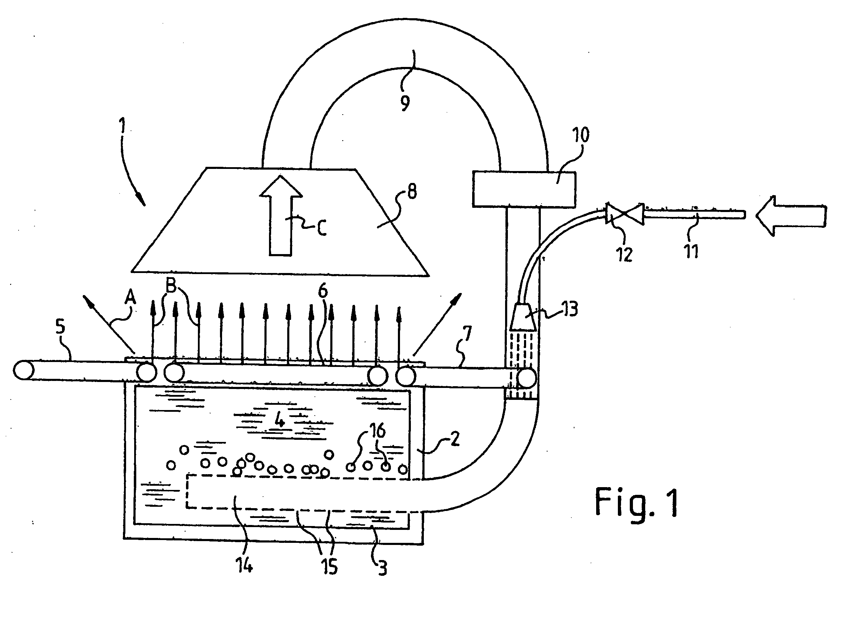

Figur 1 zeigt eine Vorrichtung 1 zum Schrumpfen von Verpackungen. Die Vorrichtung 1 umfasst ein Gehäuse 2 mit einer Heizwanne 3, in der Wasser 4 aufgeheizt wird. Oberhalb des Wasserpegels befinden sich vier Transportbänder 5, 6, 7, die der Zufuhr und dem Abtransport von nicht näher dargestellten Packungen mit schrumpffähigen Verpackungen dienen.

Alternativ können auch andere Transporteinrichtungen, z.B. Rollenbahnen für die Zufuhr und den Abtransport der Packungen vorgesehen werden. Bei Rollenbahnen ist beispielsweise der Einsatz von einseitig angeordneten Hubeinrichtungen denkbar, um die Rollenbahnen in eine Schieflage zu bringen und somit eine Transportbewegung der Packungen zu bewirken.

Oberhalb der Transportbänder 5, 6, 7 ist eine Abzugshaube 8 dargestellt, die über eine Rückführungsleitung 9 mit der Heizwanne 3 verbunden ist. Ein Ventilator 10 sorgt dabei für die gewünschte Strömung im Innern der Rückführungsleitung 9.

Eine Frischwasserleitung 11 ist über ein Sperrventil 12 ins Innere der Rückführungsleitung 9 geführt. Über einen Sprühkopf 13 kann Frischwasser in den in der Rückführungsleitung 9 befindlichen Heißdampf eingesprüht werden. Dabei wird das Frischwasser vorgewärmt, während zugleich der Heißdampf kondensiert.

Die Rückführungsleitung 9 ist mit einem perforierten Endstück 14 versehen, das als Verteilereinheit dient. Durch viele kleine Öffnungen 15 kann das rückgeführte Heizmedium, d.h. vorliegend Wasser, in die Heizwanne 3 entweichen. Dieser Vorgang ist durch kleine Dampfblasen 16 dargestellt.

Durch die Verteilung des rückgeführten Wasserdampfes mittels des perforierten Endstücks 14 im Wasser der Heizwanne 3 kondensiert dieser Dampf schell im Wärmekontakt mit dem Wasser 4. Bevorzugt wird die Temperatur des Wassers 4 zwischen 80°C und 95°C gewählt. Dieser Temperaturbereich hat sich als vorteilhaft für den gewünschten Schrumpfvorgang erwiesen.

Gleichwohl entweicht auch bei dieser Temperatur eine erhebliche Menge an Wasserdampf nach oben, wie durch die Pfeile A, B dargestellt ist. Ein Teil dieses Wasserdampfes entweicht seitlich neben der Abzugshaube 8, wie anhand des Pfeils A veranschaulicht wird. Ein wesentlicher Anteil dieses Wasserdampfes (vgl. Pfeil B) gelangt jedoch über die Abzugshaube 8 in die Rückführungsleitung 9, wie durch Pfeil C angedeutet wird.

Nicht näher dargestellte Packungen gelangen über das Transportband 5 auf das zentrale Transportband 6. Dort werden sie dem gewünschten Schrumpfvorgang unterzogen. Dabei kann ein Besprühen der Packungen durch erhitztes Wasser 4 über eine entsprechende, nicht näher dargestellte Sprüheinheit vorgenommen werden. Der Schrumpfvorgang ist jedoch auch in der Dampfatmosphäre oberhalb des beheizten Wassers 4 möglich.

Über den Ventilator 10 wird der nach oben entweichenden Wasserdampf abgezogen und durch die Rückführungsleitung 9 wieder in die Heizwanne 3 verbracht, wo er durch die Öffnung 15 des perforierten Endstücks 14 entweicht. Der Wasserverlust, der durch seitlich entweichenden Dampf (vgl. Pfeil A) stattfindet, wird entweder kontinuierlich oder taktweise durch Betätigung des Sperrventils 12 vorgenommen. Für einen kontinuierlichen Betrieb muss das Sperrventil 12 zugleich eine Dosierfunktion aufweise.

Nach dem Schrumpfvorgang werden die fertigen Packungen über das Transportband 7 abgeführt, während zugleich über das Transportband 5 neue Packungen mit noch einzuschrumpfender Verpackung zuführbar sind.

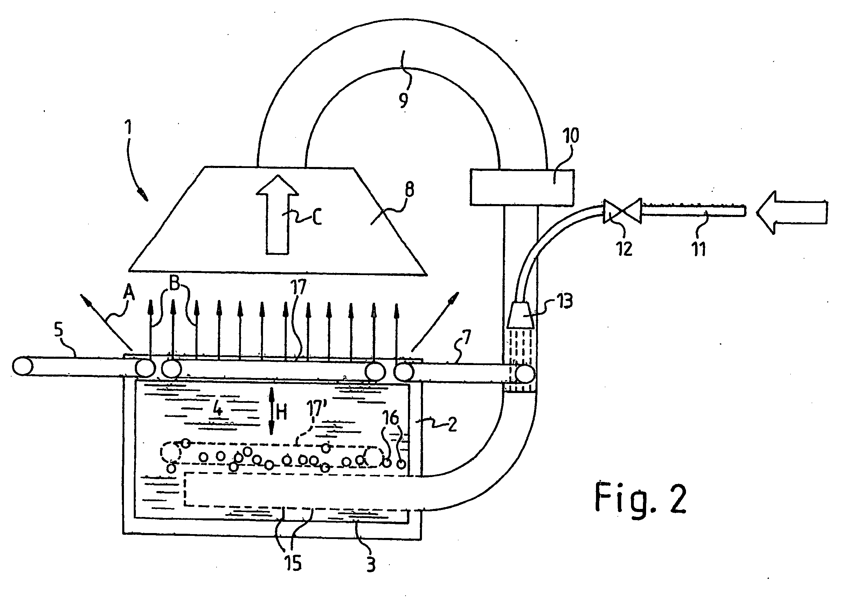

Die Ausführungsform gemäß Figur 2 entspricht im Wesentlichen dem vorgenannten Ausführungsbeispiel. Die entsprechenden Bauelemente tragen daher auch die gleiche Bezugszeichen. Abweichend vom vorgenannten Ausführungsbeispiel ist nunmehr jedoch das zentrale Transportband 17 absenkbar, sodass es zusammen mit den darauf befindlichen, nicht näher dargestellten Packungen vollständig in das Wasser 4 eintauchbar ist. Das Transportband 17 ist dabei in der eingetauchten Stellung 17' oberhalb des perforierten Entstücks 14 gestrichelt eingezeichnet. Nach dem Schrumpfvorgang wird das Transportband 17' wieder in die Position 17 oberhalb des Wasser 4 angehoben. Diese Hubbewegung ist durch den Doppelpfeil H veranschaulicht.

Die Zufuhr bzw. die Abfuhr der Packungen vollzieht sich wie anhand des ersten Ausführungsbeispiels beschrieben mittels der Transportbänder 5 und 7.

Wesentlich ist die Wärmerückgewinnung durch Rückführung des Heizmediums, in abgedampfter Form. Durch diese Maßnahme wird gegenüber dem bisherigen Stand der Technik, bei dem abgezogenes dampfförmiges Heizmedium ungenutzt an die Außenumgebung abgeführt wurde, eine enorme Energieeinsparung erzielt.

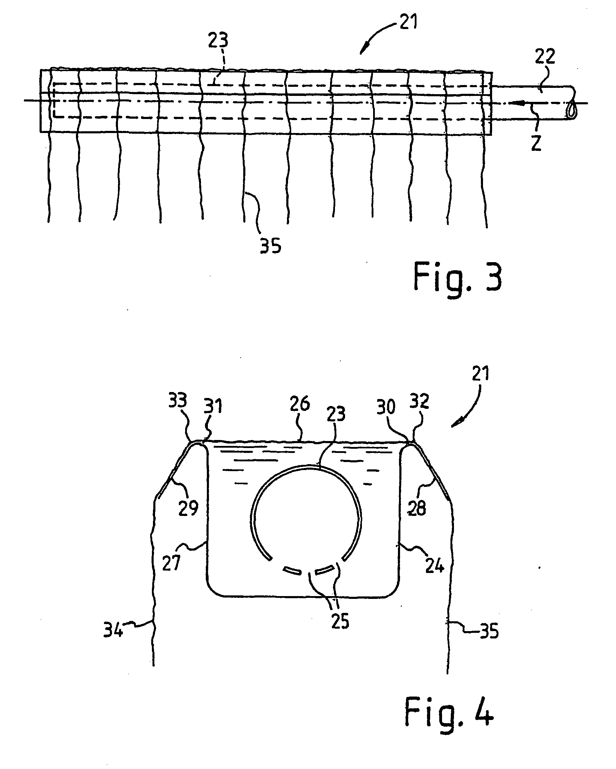

Figur 3 zeigt eine Längsansicht einer Wasserrinne 21 zur Erzeugung eines Wasservorhangs. Die Zuflussleitung 22 dient gemäß dem Pfeil Z zur Zufuhr von Wasser in die Wasserrinne 21.

Im Innern der Wasserrinne 21 ist ein Zuflussrohr 23 angeordnet, das sich über einen großen Bereich in Längsrichtung der Wasserrinne 21, vorliegend im Wesentlichen über die gesamte Länge der Wasserrinne 21 erstreckt. In Figur 3 ist das Zuflussrohr gestrichelt eingezeichnet, da es von der Seitenwand 24 der Wasserrinne 21 verdeckt ist. Das Zuflussrohr 23 umfasst mehrere Zuflussöffnungen 25, die in der vorliegenden Ausführungsvariante auf der Unterseite des Zuflussrohres 23 angeordnet sind. Wesentlich hierbei ist, dass die Zuflussöffnungen 25 unterhalb des Wasserpegels 26 liegen, so dass das Wasser möglichst ruhig und frei von Turbulenzen zugeführt werden kann. Die Zuflussöffnungen 25 können sich über die gesamte Länge des Zuflussrohres 22 und ebenso über dessen gesamten Umfang erstrecken.

Die Seitenwände 24, 27 der Wasserrinne 21 sind an der Oberseite mit Abkantungen 28, 29 versehen, wobei der jeweilige Scheitel 30, 31 der Abkantungen 28, 29 einen Überlauf 32, 33 für das in der Wasserrinne befindliche Wasser 35 bilden. Die Abkantungen 28, 29 dienten über eine gewisse Länge als Führungsfläche für das überlaufende Wasser, dass in der Folge als Wasservorhang 34, 35 beidseits der Wasserrinne 21 nach unten fällt. In Figur 3 ist der Wasservorhang durch wellenförmige Linien dargestellt. Da der Überlauf 32 über die gesamte Länge der Wasserrinne 21 gleichmäßig erfolgt, ist der Wasservorhang 35 ebenso wie der gegenüberliegende Wasservorhang 34 ohne Unterbrechungen und flächig mit einer solchen Vorrichtung realisierbar. Die Wasserrinne 21 dient dabei als Beruhigungsgefäß für das zugeführte Wasser. Durch den Ablauf des Wassers über den Überlauf 32 bzw. 33 geschieht die Ausbildung des Wasservorhangs 34 bzw. drucklos.

Eine solche Vorrichtung zur Erzeugung eines Wasservorhangs ist auch auf andere flüssige Heizmedien anwendbar. Vorliegens wurde die Ausführungsform anhand von Wasser als Heizmedium beschrieben, da Wasser ein bevorzugtes Medium im Nahrungsmittelbereich ist. Allgemein kann jedoch anstelle d Wasserrinne 21 von einer Fluidrinne und anstelle eines Wasservorhangs 34, 35 auch von einem Fluidvorhang gesproche werden.

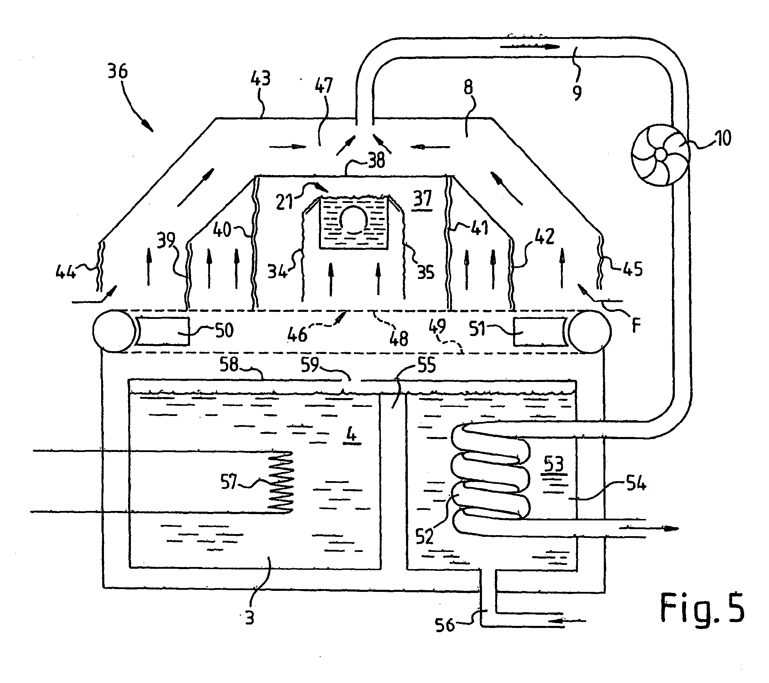

Die Vorrichtung 36 gemäß Figur 5 unterscheidet sich im wesentlichen dadurch von der vorgeschriebenen Ausführungsform, dass kein Dampfabzug aus dem Arbeitsbereich vorgesehen ist, sondern dass der Arbeitsbereich 37 durch einen Deckel 38 und Trennvorhänge 39, 40, 41, 42 abgeschott ist. Hierdurch wird sowohl eingangsseitig durch die Trennvorhänge 39, 40 sowie ausgangsseitig durch die Trennvorhänge 41, 42 ein Doppelvorhang gebildet, der die Menge des aus dem Arbeitsraums austretenden Wasserdampfes deutlich reduziert.

Oberhalb des Deckels 38 ist eine Abzugshaube 43 angeordnet, die sowohl eingangs- als auch ausgangsseitig wiederum mit jeweils einem Trennvorhang 44, 45 versehen ist. Die Trennvorhänge 44, 45 sind dabei mit einem gewissen Abstand zum Transportband 46 angeordnet, so dass durch den dadurch gebildeten Spalt Außenluft eintreten kann, wie durch den Pfeil F angedeutet ist.

Der Zwischenraum zwischen dem Deckel 38 und der Abzugshaube 43 bildet einen Saugkanal 4-7, über den Wasserdampf, der aus dem Arbeitsbereich 37 nach außen dringt abgesaugt und der Rückführungsleitung 9 zugeführt wird. Die gezielt vorgesehene Zufuhr von Außenluft dient hierbei der Ausbildung einer Strömung, da bei dieser Ausführungsform nu: noch sehr wenig Dampf in den Bereich des Saugkanals 47 gelangt.

In der vorliegenden Ausführungsform ist weiterhin zwischen dem Obertrum 48 und Untertrum 49 jeweils ein Abschottungselement 50, 51 angeordnet, durch die der offene Querschnitt für den Durchtritt von Wasserdampf im Zwischenbereich zwischen Obertrum 48 und Untertrum 49 verringert wird. Das Transportband 46 ist fluiddurchlässig ausgestaltet, so dass der Zwischenraum zwischen dem Obertrum 48 und dem Untertrum 49 für Wasserdampf aus dem Arbeitsbereich 37 zugänglich ist.

In der dargestellten Ausführungsform wird der rückgeführte Wasserdampf über die Rückführungsleitung 9 und den Ventilator 10 in einen Wärmetauscher 52 geführt. In der vorliegenden Ausführungsform ist das dem Wärmetauscher 52 umgebende Wasser 53 in einem Zusatzbehälter 54 angebracht, der über eine Trennwand 55 von der Heizwanne 3 getrennt ist. Die Trennwand 55 bildet einen Überlauf, so dass beim Nachfüllen von Frischwasser durch die Frischwasserzufuhr 56 das im Zusatzbehälter 54 vorgewärmte Frischwasser über den Überlauf der Trennwand 55 in die Heizwanne 3 gelangt. Der abgekühlte Fluidstrom in der Rückführungsleitung 9 wird nach dem Durchtritt durch den Wärmetauscher 52 in der dargestellten Ausführungsform ins Freie abgeleitet.

In der Heizwanne ist eine Heizspirale 57 stellvertretend für alle möglichen Arten von Heizelementen eingezeichnet. Auch das Heizelement 57 kann als Wärmetauscher ähnlich dem Wärmetauscher 52 ausgebildet sein, um beispielsweise eine externe Dampfheizung oder sonstige Heizfluide zu verwenden. Darüber hinaus kommen anstelle der Heizspirale 57 alle denkbaren sonstigen Heizelemente, beispielsweise elastische Heizplatten, Heizschlangen oder dergleichen in Betracht.

Im dargestellten Ausführungsbeispiel werden die zu schrumpfenden Packungen über Wasservorhänge 34, 35 benetzt, wie anhand von Figur 4 beschrieben wurde. Die Zufuhr in die Wasserrinne 21 wird hierbei auf nicht näher dargestellte Weise durch heißes Wasser 4 aus der Heizwanne 3 bewerkstelligt.

Das in den Wasservorhängen 34, 35 abfließende Wasser gelangt durch das Transportband 46 auf eine Abdeckung 58, die die Heizwanne 3 abdeckt, und durch einen Durchlass 59 in der Abdeckung 28 in die Heizwanne 3 zurück zu dem darin befindlichen Wasser 4. Die Abdeckung 58 kann hierzu mit einer leichten Trichterform versehen werden, die aus Darstellungsgründen in Figur 5 nicht erkennbar ist.

Im Ausführungsbeispiel gemäß Figur 5 besteht nur noch für eine deutlich reduzierte Dampfmenge die Gefahr des ungenutzten Austritts aus dem Arbeitsbereich 37. Diese Dampfmenge wird über den Saugkanal 47, die Rückführungsleitung 9 mit Hilfe des Ventilators 10 abgezogen und in Gegenstromrichtung zum Frischwasser aus der Frischwasserzufuhr 56 durch den Wärmetauscher 52 geleitet. Dabei wird das Frischwasser vorgewärmt, während sich der Fluidstrom im Wärmetauscher 52 abkühlt, der anschließend an die Außenumgebung abgeführt wird.

Die dargestellte Ausführungsform ist sehr energieeffizient im Hinblick auf die Abschottung des Arbeitsraums 37 sowie die Rückführung der mit dem austretenden Anteil von Dampf austretenden Energie. Darüber hinaus ist diese Ausführung sehr hygienefreundlich, da der rückgeführte Fluidstrom nach dem Durchtritt durch den Wärmetauscher nach außen abgeführt wird.

Das Transportband 46 ist nunmehr über die ganze Breite der Vorrichtung ausgeführt, wobei der Zwischenraum zwischen dem Ober- und Untertrum mit Abschottungselementen 50, 51 versehen werden kann. Der offene Querschnitt nach außen wird hierdurch ebenso wie durch die Trennvorhänge 39, 40, 41, 42, 44, 45 auf ein Minimum reduziert.

Die in der Ausführung gemäß Figur 5 dargestellten und oben beschriebenen einzelnen Maßnahmen zu Abschottung des Arbeitsraumes 37 sowie zur Rückführung und Abwärmenutzung des über den Absaugkanal 47 abgezogenen Wasserdampfes sind nicht auf die dort dargestellte Gesamtkombination der Merkmale begrenzt. Auch die Anzahl der Trennvorhänge muss nicht zwingend dem beschriebenen Ausführungsbeispiel nachempfunden werden. Darüber hinaus sind auch andere Trennelemente abweichend von der Ausgestaltung als Vorhang denkbar. Auch die Restwärmenutzung mittels eines Wärmetauschers ist unabhängig von den genannten Abschottungsmaßnahmen zur Reduzierungen der entweichenden Dampfmenge nutzbar.

### Bezugszeichenliste:

- 1: Vorrichtung
- 2: Gehäuse
- 3: Heizwanne
- 4: Wasser
- 5: Transportband
- 6: Transportband
- 7: Transportband
- 8: Abzugshaube
- 9: Rückführungsleitung
- 10: Ventilator
- 11: Frischwasserleitung
- 12: Sperrventil
- 13: Sprühkopf
- 14: Endstück
- 15: Öffnung
- 16: Dampfblase
- 17: Transportband
- 21: Wasserrinne
- 22: Zuflussleitung
- 23: Zuflussrohr
- 24: Seitenwand
- 25: Zuflussöffnungen
- 26: Wasserpegel
- 27: Seitenwand
- 28: Abkantung
- 29: Abkantung
- 30: Scheitel
- 31: Scheitel
- 32: Überlauf
- 33: Überlauf
- 34: Wasservorhang
- 35: Wasservorhang
- 36: Vorrichtung
- 37: Arbeitsbereich
- 38: Deckel
- 39: Trennvorhang
- 40: Trennvorhang
- 41: Trennvorgang
- 42: Trennvorhang
- 43: Abzugshaube
- 44: Trennvorgang
- 45: Trennvorhang
- 46: Transportband
- 47: Saugkanal
- 48: Obertrum
- 49: Untertrum
- 50: Abschottungselement
- 51: Abschottungselement
- 52: Wärmetauscher
- 53: Wasser
- 54: Zusatzbehälter
- 55: Trennwand
- 56: Frischwasserzufuhr
- 57: Heizspirale
- 58: Abdeckung
- 59: Durchlass

## Patentansprüche

1. Vorrichtung (1) zum Schrumpfen schrumpffähiger Verpackungen durch Erwärmung mittels eines flüssigen und/oder dampfförmigen Heizmediums, wobei ein Gehäuse (2) vorgesehen ist, das eine mit flüssigem Heizmedium (4) gefüllte Heizwanne (3) aufweist, wobei die Heizwanne (3) eine Heizung für flüssiges Heizmedium (4) umfasst, wobei eine Wärmerückgewinnung mittels einer Rückführungsvorrichtung (8, 9) zurückführung von aus dem flüssigen Heizmedium verdampften Heizmedium vorgesehen ist, **dadurch gekennzeichnet, dass** ein Wärmetauscher (52) vorgesehen ist, der in einem über eine Trennwand (55) von der Heizwanne (3) getrennten Zusatzbehälter (54) mit einem Zulauf für frisches Heizmedium (56) angeordnet ist, wobei das rückgeführte Heizmedium über den Wärmetauscher (52) geführt wird, und wobei die Trennwand (55) einen Überlauf vom Zusatzbehälter (54) in die Heizwanne (3) bildet.

2. Vorrichtung nach Anspruch 1, **dadurch gekennzeichnet, dass** die Rückführungsvorrichtung einen Abzug (8) für das verdampfte Heizmedium umfasst.

3. Vorrichtung nach Anspruch 2, **dadurch gekennzeichnet, dass** der Abzug im Bereich der Öffnungen am Eingang und/oder Ausgang für das Packgut vorgesehen ist.

4. Vorrichtung nach einem der vorgenannten Ansprüche, **dadurch gekennzeichnet, dass** als Heizmedium Wasser (4) vorgesehen ist.

5. Vorrichtung nach einem der vorgenannten Ansprüche, **dadurch gekennzeichnet, dass** ein Wärmekontakt der Packungen mit dampfförmigem und/ oder flüssigem Heizmedium vorgesehen ist.

6. Vorrichtung nach Anspruch 5, **dadurch gekennzeichnet, dass** die Kontaktzeit des Wärmekontakts einstellbar ist.

7. Vorrichtung nach Anspruch 6, **dadurch gekennzeichnet, dass** die Kontaktzeit durch die Transportzeit der Packungen einstellbar ist.

8. Vorrichtung nach einem der vorgenannten Ansprüche **dadurch gekennzeichnet, dass** Trennelemente (39, 40, 41, 42) vorgesehen sind, die den Eintritt bzw. den Austrag von zu schrumpfenden Packungen erlauben.

9. Vorrichtung nach Anspruch 8, **dadurch gekennzeichnet, dass** die Trennelemente als Vorhänge (39, 40, 41, 42) ausgebildet sind.

10. Vorrichtung nach einem der vorgenannten Ansprüche, **dadurch gekennzeichnet, dass** sich ein Transportband (46) durch den Arbeitsraum (37) hindurcherstreckt.

11. Vorrichtung nach Anspruch 10, **dadurch gekennzeichnet, dass** ein oder mehrere Abschottungselemente (50, 51) im Zwischenraum zwischen Obertrum (48) und Untertrum (49) des Transportbands (46) angeordnet ist.

12. Vorrichtung nach einem der vorgenannten Ansprüche, **dadurch gekennzeichnet, dass** ein Absaugkanal (47) vorgesehen ist, um aus dem Arbeitsraum (37) austretendes Heizmedium abzusaugen und der Wärmerückgewinnung zuzuführen.

13. Verfahren zum Schrumpfen schrumpffähiger Verpackungen von Packungen mittels eines flüssigen Heizmediums, **dadurch gekennzeichnet, dass** eine Vorrichtung nach einem der vorgenannten Ansprüche verwendet wird.

## Claims

1. A device (1) for shrinking shrinkable packages by heating using a liquid and/or vaporous heating medium, in which a housing (2) is provided, which comprises a heating trough (3) filled with liquid heating medium (4), and the heating trough (3) comprises a heater for liquid heating medium (4), and a heat recovery is provided by means of a recirculation device (8, 9) for returning heating medium which has evaporated from the liquid heating medium, **characterised in that** a heat exchanger (52) is provided, which is arranged in a supplementary container (54) separated from the heating trough (3) by a dividing wall (55) and having an inlet for fresh heating medium (56), and the recirculated heating medium is fed through the heat exchanger (52), and the dividing wall (55) forms an overflow from the supplementary container (54) into the heating trough (3).

2. The device according to claim 1, **characterised in that** the recirculation device comprises an extraction device (8) for the evaporated heating medium.

3. The device according to claim 2, **characterised in that** the extraction device is provided in the region of the openings at the entry and/or exit for the items to be packaged.

4. The device according to one of the preceding claims, **characterised in that** water (4) is provided as the heating medium.

5. The device according to one of the preceding claims, **characterised in that** a thermal contact of the packages is provided with vaporous and/or liquid heating medium.

6. The device according to claim 5, **characterised in that** the contact time of the thermal contact is adjustable.

7. The device according to claim 6, **characterised in that** the contact time can be adjusted by the transport time of the packages.

8. The device according to one of the preceding claims, **characterised in that** separating elements (39, 40, 41, 42) are provided for permitting packages that are to be shrunk to be input or removed.

9. The device according to claim 8, **characterised in that** the separating elements are designed in the form of curtains (39, 40, 41, 42).

10. The device according to one of the preceding claims, **characterised in that** a transportation belt (46) extends through the working space (37).

11. The device according to claim 10, **characterised in that** one or more partitioning elements (50, 51) are arranged in the intermediate space between the upper strand (48) and lower strand (49) of the transport belt (46).

12. The device according to one of the preceding claims, **characterised in that** an extraction duct (47) is provided for extracting heating medium emerging from the working space (37) and returning it to the heat recovery means.

13. A method for shrinking shrinkable packages for packets with a liquid heating medium, **characterised in that** a device according to one of the preceding claims is used.

## Revendications

1. Dispositif (1) destiné à assurer la rétraction d'emballages rétractables par échauffement au moyen d'un fluide chauffant liquide et/ou à l'état de vapeur, dispositif
dans lequel il est prévu un boitier ou carter (2) qui présente une cuve chauffante (3) remplie de fluide chauffant liquide (4),
dans lequel la cuve chauffante (3) comprend un dispositif de chauffage pour le fluide chauffant liquide (4),
et dans lequel il est prévu une récupération de chaleur au moyen d'un dispositif de récupération (8, 9) pour récupérer le fluide chauffant évaporé, provenant du fluide chauffant liquide,
**caractérisé en ce qu'**il est prévu un échangeur thermique (52), qui est agencé dans un réservoir auxiliaire (54) séparé de la cuve chauffante (3) par une paroi de séparation (55) et comportant une alimentation pour du fluide chauffant frais (56), le fluide chauffant récupéré étant mené à travers l'échangeur thermique (52), et la paroi de séparation (55) formant un déversoir de trop plein du réservoir auxiliaire (54) vers la cuve chauffante (3).

2. Dispositif selon la revendication 1, **caractérisé en ce que** le dispositif de récupération comprend un évent (8) pour le fluide chauffant évaporé.

3. Dispositif selon la revendication 2, **caractérisé en ce que** l'évent est prévu dans la zone des ouvertures à l'entrée et/ou à la sortie pour le produit d'emballage.

4. Dispositif selon l'une des revendications précédentes, **caractérisé en ce qu'**il est prévu de l'eau (4) comme fluide chauffant.

5. Dispositif selon l'une des revendications précédentes, **caractérisé en ce qu'**il est prévu un contact thermique des emballages avec du fluide chauffant à l'état de vapeur et/ou liquide.

6. Dispositif selon la revendication 5, **caractérisé en ce que** le temps de contact du contact thermique est réglable.

7. Dispositif selon la revendication 6, **caractérisé en ce que** le temps de contact est réglable par le temps de transport des emballages.

8. Dispositif selon l'une des revendications précédentes, **caractérisé en ce que** sont prévus des éléments de séparation (39, 40, 41, 42) qui permettent l'entrée ou respectivement la sortie des emballages à rétracter.

9. Dispositif selon la revendication 8, **caractérisé en ce que** les éléments de séparation sont conçus comme des rideaux (39, 40, 41, 42).

10. Dispositif selon l'une des revendications précédentes, **caractérisé en ce qu'**une bande de transport (46) s'étend à travers l'espace de travail (37).

11. Dispositif selon la revendication 10, **caractérisé en ce qu'**un ou plusieurs éléments de cloisonnement (50, 51) sont agencés entre le brin supérieur (48) et le brin inférieur (49) de la bande de transport (46).

12. Dispositif selon l'une des revendications précédentes, **caractérisé en ce qu'**il est prévu un canal d'aspiration (47) afin d'aspirer du fluide chauffant, qui sort de l'espace de travail (37), et de l'amener à la récupération de chaleur.

13. Procédé destiné à assurer la rétraction d'emballages rétractables de produits à emballer, par échauffement au moyen d'un fluide chauffant liquide, **caractérisé en ce qu'**on utilise un dispositif selon l'une des revendications précédentes.
